# EUROPEAN PATENT APPLICATION

(11) **EP 3 425 242 A1**
(43) Date of publication of application: **09.01.2019**
(21) Application number: 18173126.6
(22) Date of filing: 18.05.2018
(51) Int. Cl.: F16H 61/662, F16H 61/664, F16H 63/06

(54) **CONTINUOUSLY VARIABLE TRANSMISSION CONTROL SYSTEM FOR ROLLING VEHICLE**

(30) Priority: 04.07.2017 TW 106122375
(71) Applicant: Motive Power Industry Co., Ltd., Dacun Township, Changhua County 515 (TW)
(72) Inventor: Cheng, Hsin-Lin, 515 Changhua County (TW); Wu, Yi-Huan, 515 Changhua County (TW)
(74) Representative: DTS Patent- und Rechtsanwälte Schnekenbühl und Partner mbB

(57) **Abstract**

A continuously variable transmission control system for a rolling vehicle includes an electrically controlled device electrically connected to a transmission driving unit connected to a belt-driven continuously variable transmission or a ball-driven continuously variable transmission. The belt-driven continuously variable transmission includes a driving wheel, a driven wheel and a conveyor belt. The conveyor belt is movably fitted in the driving wheel and the driven wheel. The ball-driven continuously variable transmission includes a transmission frame, transmission units, an annular driving unit, two oblique support units, a power-input rotor and a power-output rotor. Therefore, the continuously variable transmission control system for a rolling vehicle uses the electrically controlled device and the continuously variable transmission to enhance efficiency of transmission.

## Description

### FIELD OF THE INVENTION

The present disclosure relates to continuously variable transmission control systems for rolling vehicles and, more particularly, to a continuously variable transmission control system which is for use with a rolling vehicle and comprises an electrically controlled device and a continuously variable transmission with a view to enhancing efficiency of transmission.

### BACKGROUND OF THE INVENTION

Nowadays, vehicles always come with a gear shift mechanism in order to adjust speed and reduce fuel consumption. A conventional gear shift mechanism essentially comprises a gear train or a combination of a gear train and an oil duct. However, the gear train or the combination of the gear train and the oil duct is not only intricate and bulky, but also disadvantageously features short gear intervals, great transmission loss, and gear shift jerks. Hence, it is important to devise a continuously variable transmission control system for a rolling vehicle, using an electrically controlled device and a continuously variable transmission to enhance efficiency of transmission.

### SUMMARY OF THE INVENTION

In view of the drawbacks of the prior art, the inventor of the present disclosure conceived room for improvement in the prior art and thus conducted extensive researches and experiments according to the inventor's years of experience in the related industry, and finally developed a continuously variable transmission control system for a rolling vehicle so that the continuously variable transmission control system for a rolling vehicle uses an electrically controlled device and a continuously variable transmission to enhance efficiency of transmission.

The present disclosure provides a continuously variable transmission control system for a rolling vehicle, comprising an electrically controlled device electrically connected to a transmission driving unit. The transmission driving unit is connected to a belt-driven continuously variable transmission or a ball-driven continuously variable transmission. The belt-driven continuously variable transmission comprises a driving wheel, a driven wheel and a conveyor belt. The conveyor belt is movably fitted in a V-shaped groove of the driving wheel and a V-shaped groove of the driven wheel. The driving wheel comprises an inner driving semi-wheel and an outer driving semi-wheel. The driven wheel comprises an inner driven semi-wheel and an outer driven semi-wheel. The transmission driving unit is connected to the inner driving semi-wheel. The ball-driven continuously variable transmission comprises a transmission frame, a plurality of transmission units, an annular driving unit, two oblique support units, a power-input rotor and a power-output rotor. The transmission frame has a plurality of receiving holes, a plurality of cruciform guide grooves and a plurality of guide slots, the receiving holes being arranged annularly, the cruciform guide grooves being arranged annularly, the guide slots being arranged annularly. The cruciform guide grooves are farther than the receiving holes from a center of the transmission frame. The receiving holes are farther than the guide slots from the center of the transmission frame. Each receiving hole is connected communicatively between a corresponding one of the cruciform guide grooves and a corresponding one of the guide slots. The transmission units each comprise transmission balls, transmission rods and transmission slide bars. The transmission rods are movably, penetratingly disposed at the transmission balls, respectively. The transmission slide bars are connected perpendicularly to terminal portions of the transmission rods, respectively. The terminal portions are exposed from the transmission balls, respectively. Each transmission ball is received movably in a corresponding one of the receiving holes and exposed from two open sides of the receiving hole. The transmission slide bars and the terminal portions of the transmission rods slide along the cruciform guide grooves, respectively. Opposing terminal portions of the transmission rods are exposed from the transmission balls and slide along the guide slots, respectively. The annular driving unit is movably fitted in the transmission frame and has a plurality of oblique guide holes. The oblique guide holes are movably fitted in the transmission rods to guide the transmission rods in moving in an axial direction of the annular driving unit, respectively. The oblique support units each comprise an oblique support ring, a truncated-cone ball ring and an oblique support component. The oblique support rings each have an outward-sloping support circular surface and an inward-sloping clamping circular surface. The oblique support components each have an outward-sloping clamping circular surface. The oblique support components are connected to two sides of the transmission frame, respectively. Each truncated-cone ball ring is clamped between a corresponding one of the inward-sloping clamping circular surfaces and a corresponding one of the outward-sloping clamping circular surfaces. The outward-sloping support circular surfaces support the transmission balls from two open sides of the receiving holes, respectively. The power-input rotor has an inward-sloping power-input clamping circular surface. The power-output rotor has an inward-sloping power-output clamping circular surface. The inward-sloping power-input clamping circular surface and the inward-sloping power-output clamping circular surface clamp the transmission balls from two open sides of the receiving holes, respectively, with the transmission driving unit connected to the annular driving unit.

Regarding the continuously variable transmission control system for a rolling vehicle, the electrically controlled devices each comprise a processor, a sensor control unit, and a transmission control unit. The sensor control unit and the transmission control unit are electrically connected to the processor. The sensor control unit is electrically connected to a gear sensor, an engine rotation speed sensor, a throttle position sensor or a switch position sensor, and a vehicular speed sensor. The transmission control unit is electrically connected to the transmission driving unit.

Regarding the continuously variable transmission control system for a rolling vehicle, the electrically controlled device comprises an input unit, a display unit, an output unit, or a power supply unit, each of which is electrically connected to the processor, or comprises a combination of the input unit, the display unit, the output unit, and the power supply unit.

Regarding the continuously variable transmission control system for a rolling vehicle, the transmission driving unit comprises a driving motor and a driving gear which are connected. The driving motor is electrically connected to the electrically controlled device. The driving gear is connected to the inner driving semi-wheel or the annular driving unit.

Regarding the continuously variable transmission control system for a rolling vehicle, the transmission frame comprises two semi-transmission frames which are connected. The semi-transmission frames each have a plurality of semi-receiving holes, a plurality of semi-cruciform guide grooves and a plurality of semi-guide slots to form the receiving holes, the cruciform guide grooves and the guide slots, respectively.

Regarding the continuously variable transmission control system for a rolling vehicle, the transmission balls each comprise therein two limiting lubrication washers and a lubrication washer, with the lubrication washer disposed between the limiting lubrication washers, and the transmission rods are movably penetratingly disposed at the limiting lubrication washers and the lubrication washer.

Regarding the continuously variable transmission control system for a rolling vehicle, the annular driving unit comprises an annular body and at least one arcuate gear rack, with the oblique guide holes disposed at the annular body, and the arcuate gear rack disposed on the outer circumferential surface of the annular body. The transmission driving unit is connected to the arcuate gear rack.

Regarding the continuously variable transmission control system for a rolling vehicle, the oblique support components are each T-shaped, and protruding portions of the oblique support components penetrate the truncated-cone ball rings and the oblique support rings before being connected to a side of the transmission frame.

Regarding the continuously variable transmission control system for a rolling vehicle, the protruding portions of the oblique support components each comprise a plurality of extending guide grooves arranged annularly and adapted to be in communication with the guide slots, respectively.

Regarding the continuously variable transmission control system for a rolling vehicle, the power-input rotor comprises a first axle, and the power-output rotor comprises a second axle, with the first and second axles pivotally connected to the oblique support components, respectively.

Therefore, according to the present disclosure, a continuously variable transmission control system for a rolling vehicle uses an electrically controlled device and a continuously variable transmission to enhance efficiency of transmission.

### BRIEF DESCRIPTION OF THE DRAWINGS

FIG. 1 is a block diagram of an electrically controlled device and a transmission driving unit according to a preferred embodiment of the present disclosure;
FIG. 2 is a perspective view of a belt-driven continuously variable transmission and the transmission driving unit according to a preferred embodiment of the present disclosure;
FIG. 3 is a perspective view of a ball-driven continuously variable transmission and the transmission driving unit according to a preferred embodiment of the present disclosure;
FIG. 4 is a perspective view of an annular driving unit and the transmission driving unit according to a preferred embodiment of the present disclosure;
FIG. 5 is a perspective view of the ball-driven continuously variable transmission without any annular driving unit according to a preferred embodiment of the present disclosure;
FIG. 6 is another perspective view of the ball-driven continuously variable transmission without any annular driving unit according to a preferred embodiment of the present disclosure;
FIG. 7 is an exploded view which shows a transmission unit, transmission frame, power-input rotor and power-output rotor according to a preferred embodiment of the present disclosure;
FIG. 8 is another exploded view which shows the transmission unit, transmission frame, power-input rotor and power-output rotor according to a preferred embodiment of the present disclosure;
FIG. 9 is an exploded view which shows a transmission unit, transmission frame, power-input rotor and oblique support unit according to a preferred embodiment of the present disclosure;
FIG. 10 is another exploded view which shows the transmission unit, transmission frame, power-input rotor and oblique support unit according to a preferred embodiment of the present disclosure;
FIG. 11 is an exploded view which shows a transmission unit, transmission frame, power-output rotor and oblique support unit according to a preferred embodiment of the present disclosure;
FIG. 12 is another exploded view which shows the transmission unit, transmission frame, power-output rotor and oblique support unit according to a preferred embodiment of the present disclosure;
FIG. 13 is a cutaway view based on FIG. 5; and
FIG. 14 is a cross-sectional view based on FIG. 13.

### DETAILED DESCRIPTION OF THE PREFERRED EMBODIMENTS

Objectives, features, and advantages of the present disclosure are hereunder illustrated with specific embodiments in conjunction with the accompanying drawings and described below.

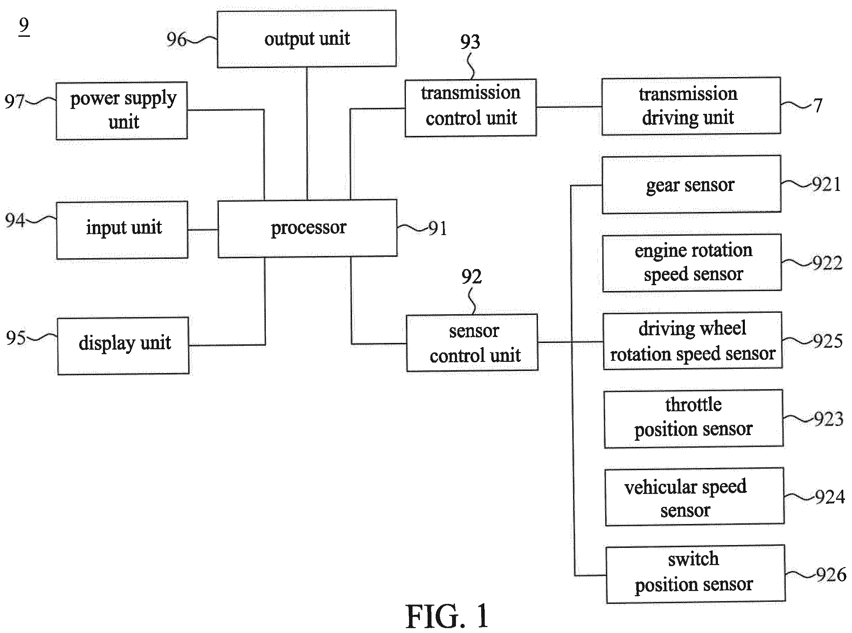

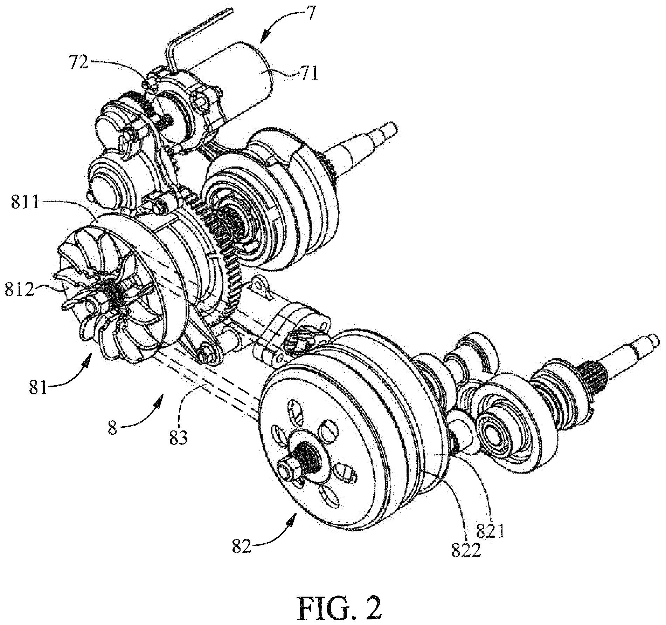

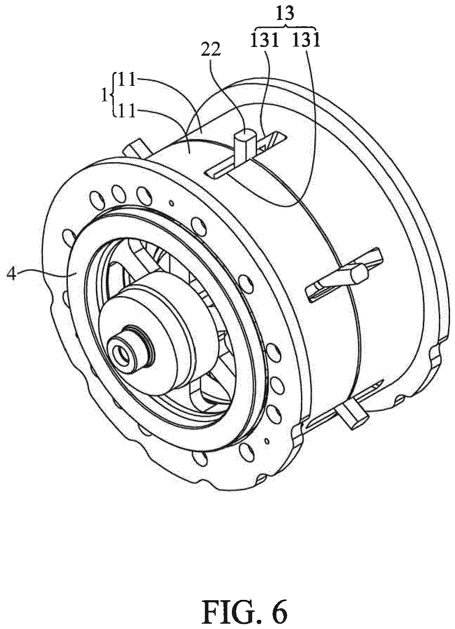

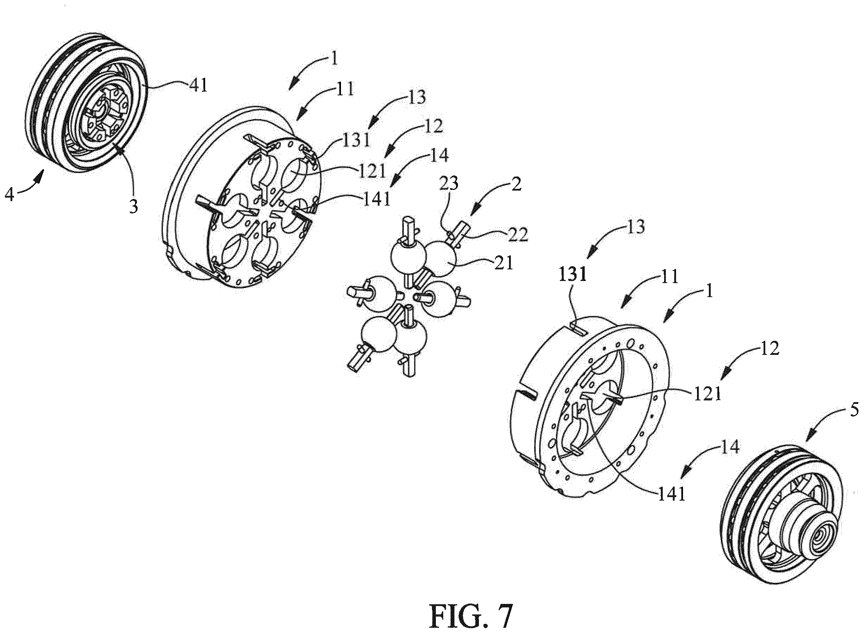

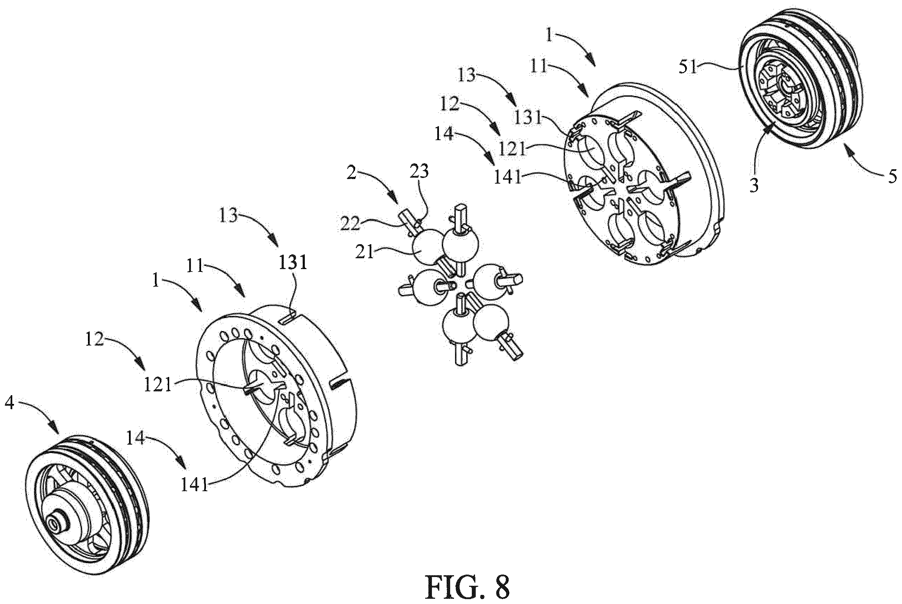

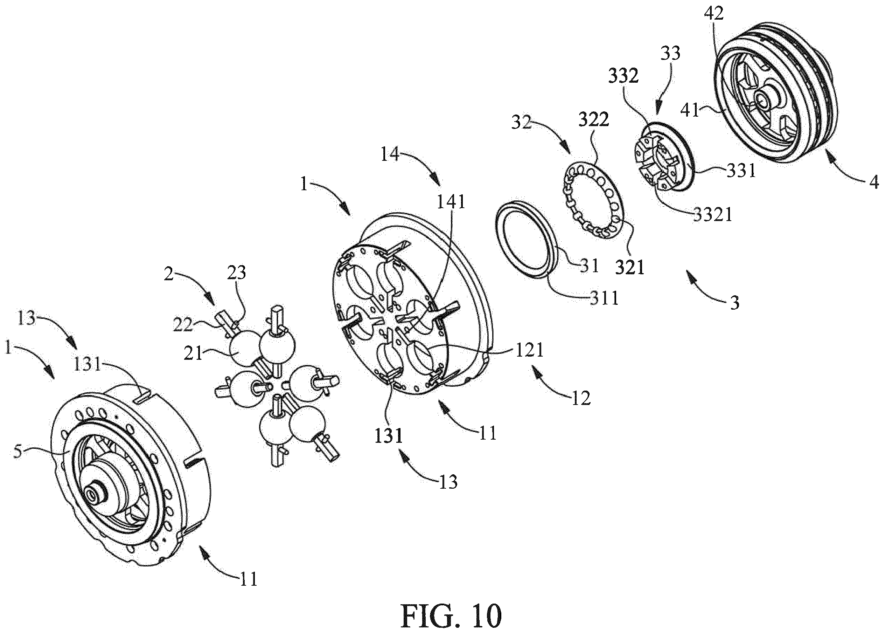

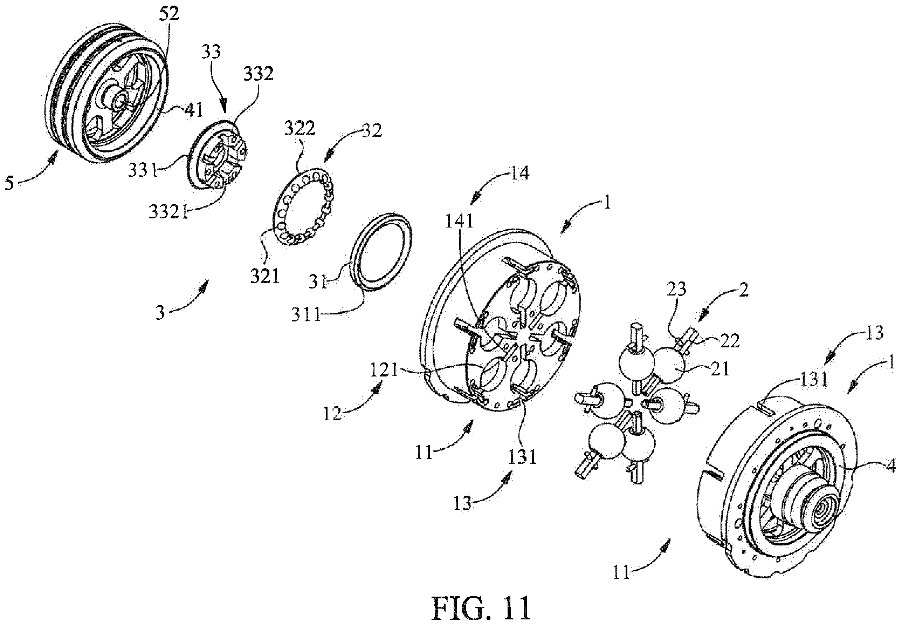

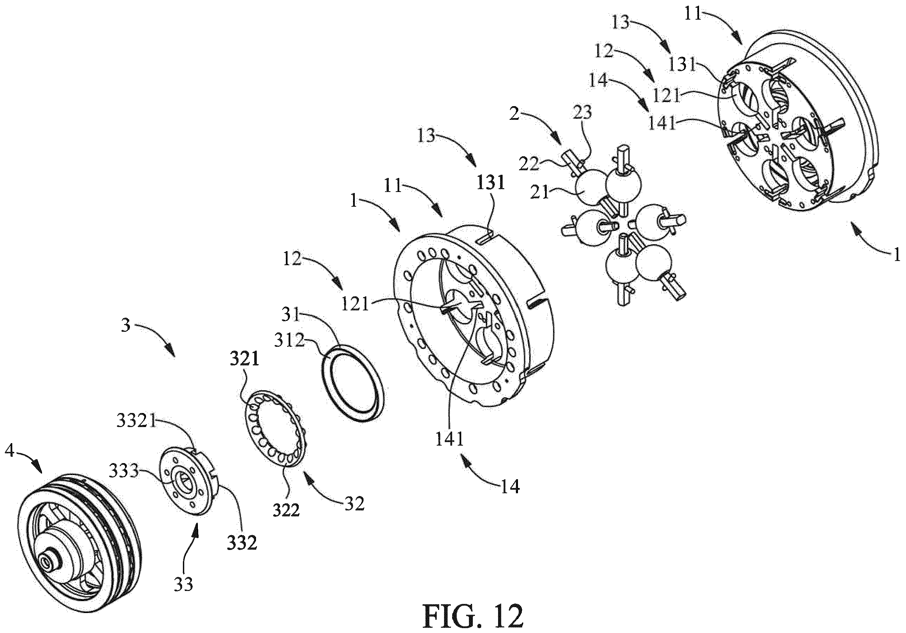

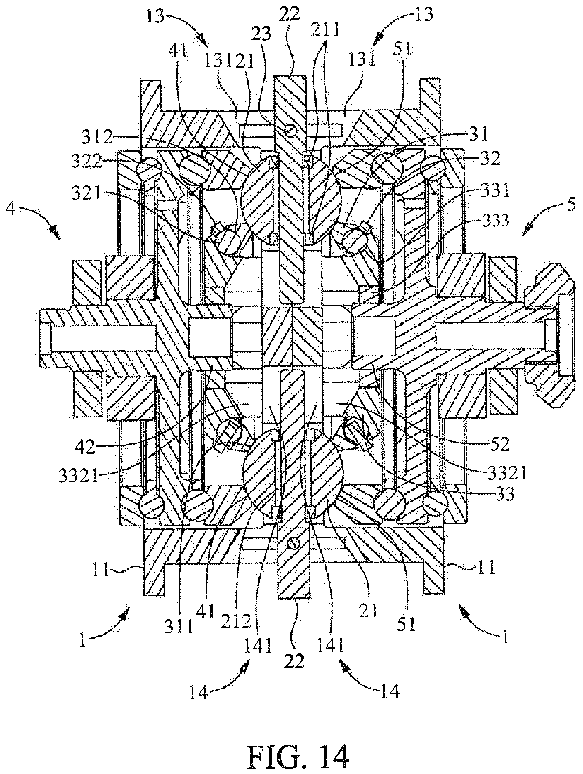

Referring to FIG. 1 through FIG. 14, the present disclosure provides a continuously variable transmission control system for a rolling vehicle. The continuously variable transmission control system for a rolling vehicle comprises an electrically controlled device 9 electrically connected to a transmission driving unit 7. The transmission driving unit 7 is connected to a belt-driven continuously variable transmission 8 or a ball-driven continuously variable transmission. The belt-driven continuously variable transmission 8 comprises a driving wheel 81, a driven wheel 82 and a conveyor belt 83. The conveyor belt 83 is made of leather or metal. The conveyor belt 83 has a trapezoidal section. The conveyor belt 83 is movably fitted in a V-shaped groove of the driving wheel 81 and a V-shaped groove of the driven wheel 82. The driving wheel 81 comprises an inner driving semi-wheel 811 and an outer driving semi-wheel 812. The inner driving semi-wheel 811 is movable axially relative to the outer driving semi-wheel 812 to change the distance between the inner driving semi-wheel 811 and the outer driving semi-wheel 812. The driven wheel 82 comprises an inner driven semi-wheel 821 and an outer driven semi-wheel 822. The inner driven semi-wheel 821 is movable axially relative to the outer driven semi-wheel 822 to change the distance between the inner driven semi-wheel 821 and the outer driven semi-wheel 822. The transmission driving unit 7 is connected to the inner driving semi-wheel 811 through a gear train to change the distance between the inner driving semi-wheel 811 and the outer driving semi-wheel 812, so as to perform continuously variable transmission. The ball-driven continuously variable transmission comprises a transmission frame 1, a plurality of transmission units 2, an annular driving unit 6, two oblique support units 3, a power-input rotor 4 and a power-output rotor 5. The transmission frame 1 corresponds in shape to a car wheel and has two sides with a cylindrical depression each. The transmission frame 1 comprises a plurality of receiving holes 12, a plurality of cruciform guide grooves 13 and a plurality of guide slots 14. The receiving holes 12 are arranged annularly. The cruciform guide grooves 13 are arranged annularly. The guide slots 14 are arranged annularly. The cruciform guide grooves 13 are farther than the receiving holes 12 from the center of the transmission frame 1. The receiving holes 12 are farther than the guide slots 14 from the center of the transmission frame 1. Each receiving hole 12 is connected communicatively between a corresponding one of the cruciform guide grooves 13 and a corresponding one of the guide slots 14. The receiving holes 12 are round. The transmission units 2 each comprise transmission balls 21, transmission rods 22 and transmission slide bars 23. The transmission rods 22 are movably, penetratingly disposed at the transmission balls 21, respectively. The transmission slide bars 23 are connected perpendicularly to terminal portions of the transmission rods 22, respectively. The terminal portions of the transmission rods 22 are exposed from the transmission balls 21, respectively. Each transmission ball 21 is received movably in a corresponding one of the receiving holes 12 and exposed from two open sides of the receiving hole 12. The transmission slide bars 23 and the terminal portions of the transmission rods 22 slide along transverse portions and longitudinal portions of the cruciform guide grooves 13, respectively. The terminal portions of the transmission rods 22 are exposed from the transmission frame 1 too. The opposing terminal portions of the transmission rods 22 slide along the guide slots 14, respectively. The annular driving unit 6 is movably fitted on the outer circumferential surface the transmission frame 1. The annular driving unit 6 rotates clockwise or counterclockwise relative to the transmission frame 1. The annular driving unit 6 has a plurality of oblique guide holes 61 spaced apart equidistantly. The oblique guide holes 61 movably fit the terminal portions of the transmission rods 22, respectively, with the terminal portions exposed from the transmission frame 1. The cruciform guide grooves 13 guide the transmission rods 22 in moving in the axial direction of the annular driving unit 6, so as to cause the transmission rods 22 and the transmission balls 21 to turn left or turn right (as shown in FIG. 14). The oblique support units 3 each comprise an oblique support ring 31, a truncated-cone ball ring 32 and an oblique support component 33. The two lateral sides of each oblique support ring 31 have an outward-sloping support circular surface 311 and an inward-sloping clamping circular surface 312, respectively. Each oblique support component 33 has an outward-sloping clamping circular surface 331. The oblique support components 33 are each connected to the cylindrical depressions on the two sides of the transmission frame 1. Each truncated-cone ball ring 32 has a plurality of balls 321 and a truncated-cone ring 322. The balls 321 are spaced apart and movably received in the truncated-cone ring 322. Each truncated-cone ball ring 32 is clamped between the inward-sloping clamping circular surface 312 and the outward-sloping clamping circular surface 331. The outward-sloping support circular surfaces 311 support inner edges of the transmission balls 21 from the two open sides of the receiving holes 12, respectively. The power-input rotor 4 has an inward-sloping power-input clamping circular surface 41. The power-output rotor 5 has an inward-sloping power-output clamping circular surface 51. The inward-sloping power-input clamping circular surface 41 and the inward-sloping power-output clamping circular surface 51 clamp outer edges of the transmission balls 21 from the two open sides of the receiving holes 12, respectively. The transmission driving unit 7 is connected to the annular driving unit 6 to drive the annular driving unit 6 to rotate clockwise or counterclockwise relative to the transmission frame 1, so as to facilitate continuously variable transmission.

According to the present disclosure, a continuously variable transmission control system for a rolling vehicle enhances the efficiency of transmission of fossil fuel-powered vehicles, composite power vehicles, and electric vehicles by electronic control of an electrically controlled device and low wear loss of a continuously variable transmission.

Referring to FIG. 14, rotation of the power-input rotor 4 and rightward slide of the transmission slide bars 23 cause the transmission rods 22 and the transmission balls 21 to turn right and cause the transmission rods 22 to slide relative to the transmission balls 21; hence, not only does the power-output rotor 4 rotate in a direction opposite to that of the power-input rotor 4, but the power-output rotor 5 also rotates slower than the power-input rotor 4, thereby achieving deceleration. By contrast, rotation of the power-input rotor 4 and leftward slide of the transmission slide bars 23 cause the transmission rods 22 and the transmission balls 21 to turn left and cause the transmission rods 22 to slide relative to the transmission balls 21; hence, not only does the power-output rotor 5 rotate in a direction opposite to that of the power-input rotor 4, but the power-output rotor 5 also rotates faster than the power-input rotor 4, thereby achieving acceleration.

Referring to FIG. 14, the transmission balls 21 are movably clamped between the inward-sloping power-input clamping circular surface 41, the inward-sloping power-output clamping circular surface 51 and the outward-sloping support circular surface 311. Therefore, the transmission balls 21 are each clamped at only four points, thereby experiencing low friction, achieving high transmission efficiency, and causing no jerks during the transmission process. The transmission frame 1, the transmission units 2 and the oblique support units 3 are clamped by the inward-sloping power-input clamping circular surface 41 of the power-input rotor 4 and the inward-sloping power-output clamping circular surface 51 of the power-output rotor 5 and thus float between the power-input rotor 4 and the power-output rotor 5. Therefore, even if the power-input rotor 4 starts to rotate, or the transmission units 2 turn while the power-input rotor 4 is rotating, every aforesaid component will still be in contact with each other well, thereby maintaining high transmission efficiency. Furthermore, according to the present disclosure, the continuously variable transmission control system for a rolling vehicle comprises the transmission units 2 capable of turning to a great extent, so as to achieve wide continuously variable transmission intervals despite its compactness.

Referring to FIG. 1 through FIG. 3, regarding the continuously variable transmission control system for a rolling vehicle, the electrically controlled device 9 comprises a processor 91, a sensor control unit 92 and a transmission control unit 93. The processor 91 is a CPU or a microprocessor that processes electronic signals and comprises a memory. The sensor control unit 92 and the transmission control unit 93 are electrically connected to the processor 91. The sensor control unit 92 and the transmission control unit 93 are control circuits. The sensor control unit 92 is electrically connected to a gear sensor 921, an engine rotation speed sensor 922 (or a motor rotation speed sensor), a throttle position sensor 923 (or a switch position sensor 926) and a vehicular speed sensor 924. The transmission control unit 93 is electrically connected to the transmission driving unit 7. As soon as a clutch starts to operate, the vehicular speed sensor 924 can be replaced by a driving wheel rotation speed sensor 925. Therefore, the processor 91 receives, in a conventional manner pertaining to various existing automatic gear shifting modes, electronic signals from the gear sensor 921, the engine rotation speed sensor 922 (or the motor rotation speed sensor), the throttle position sensor 923 (or the switch position sensor 926) and the vehicular speed sensor 924 in order for computation of the electronic signals to be carried out, and then output the electronic signals to the transmission control unit 93 to control the transmission driving unit 7 to perform continuously variable transmission on the belt-driven continuously variable transmission 8 or the ball-driven continuously variable transmission.

Referring to FIG. 1, regarding the continuously variable transmission control system for a rolling vehicle, the electrically controlled device 9 comprises an input unit 94, a display unit 95, an output unit 96, or a power supply unit 97, each of which is electrically connected to the processor 91, or comprises a combination of the input unit 94, the display unit 95, the output unit 96, and the power supply unit 97. The input unit 94 comprises a button or any other manually-operable interface for controlling the electrically controlled device 9 manually and thereby achieve continuously variable transmission. The display unit 95 is a monitor for displaying a gear shifting mode, a gear, engine rotation speed (or motor rotation speed) or vehicular speed. The output unit 96 is RS232 or any other output interface for outputting electronic signals to external electronic devices (such as a computer for use in maintenance operations). The power supply unit 97 is a battery for supplying power to the processor 91 and any other electrically connected electronic devices.

Referring to FIG. 1 through FIG. 3, regarding the continuously variable transmission control system for a rolling vehicle, the transmission driving unit 7 comprises a driving motor 71 and a driving gear 72 which are connected. The driving motor 71 is electrically connected to the transmission control unit 93 of the electrically controlled device 9. The driving gear 72 is connected to the inner driving semi-wheel 811 or the annular driving unit 6. The driving motor 71 receives electronic signals from the transmission control unit 93 to drive the driving gear 72 to rotate clockwise or counterclockwise, so as to cause the belt-driven continuously variable transmission 8 or the ball-driven continuously variable transmission to perform continuously variable transmission.

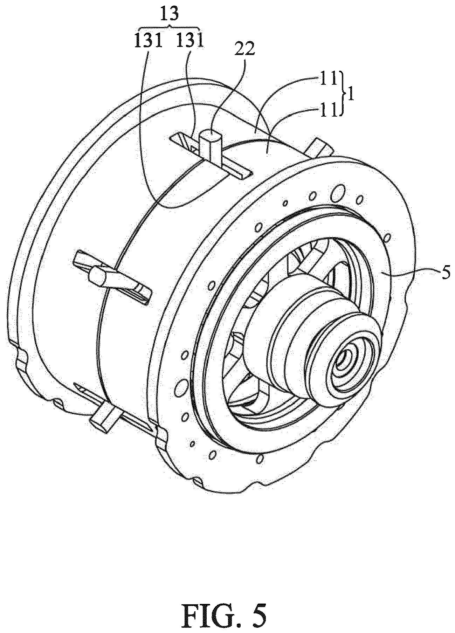

Referring to FIG. 5 through FIG. 14, regarding the continuously variable transmission control system for a rolling vehicle, the transmission frame 1 comprises two semi-transmission frames 11 which are connected, whereas the semi-transmission frames 11 each comprise a plurality of semi-receiving holes 121, a plurality of semi-cruciform guide grooves 131 and a plurality of semi-guide slots 141 to form the receiving holes 12, the cruciform guide grooves 13 and the guide slots 14, respectively. Therefore, according to the present disclosure, the continuously variable transmission control system for a rolling vehicle is easy to assemble, and the transmission balls 21 can be floatingly pivotally connected to the receiving holes 12 by the transmission slide bars 23 and the transmission rods 22, respectively.

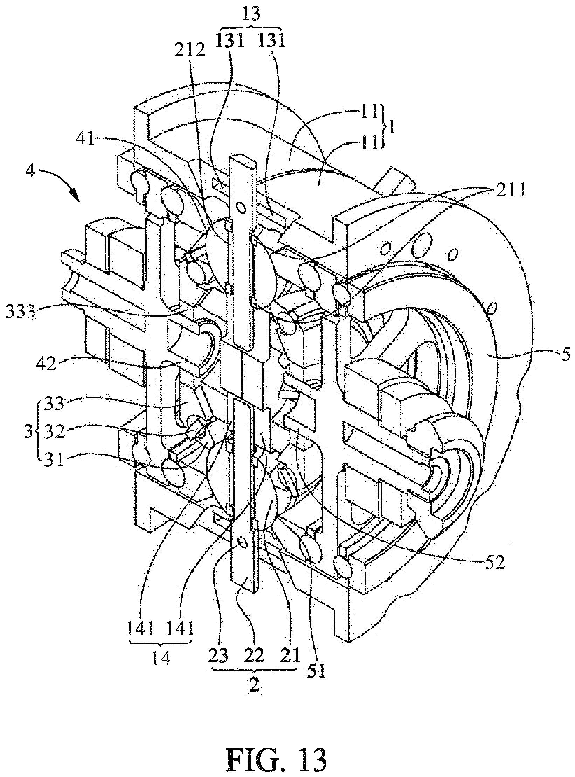

Referring to FIG. 13 and FIG. 14, regarding the continuously variable transmission control system for a rolling vehicle, the transmission balls 21 each comprise therein two limiting lubrication washers 211 and a lubrication washer 212. The limiting lubrication washers 211 are self-lubricating washers. The lubrication washers 212 are self-lubricating washers. The transmission rods 22 are movably penetratingly disposed at the limiting lubrication washers 211 and the lubrication washers 212. The transmission rods 22 slide relative to the transmission balls 21 through the limiting lubrication washers 211 and the lubrication washers 212 with reduced friction.

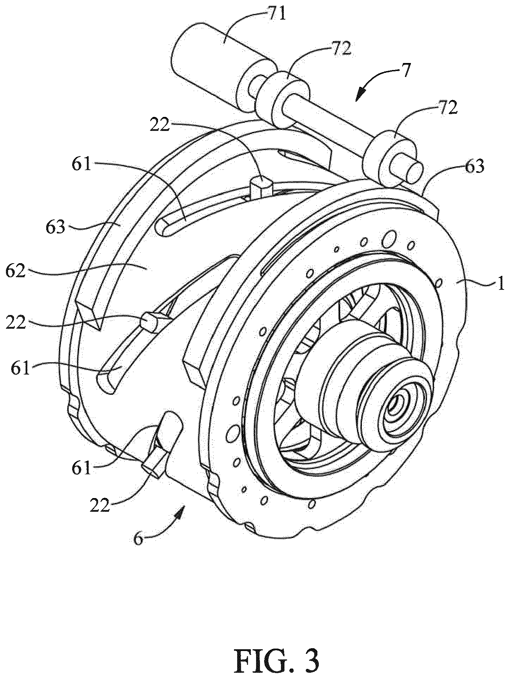

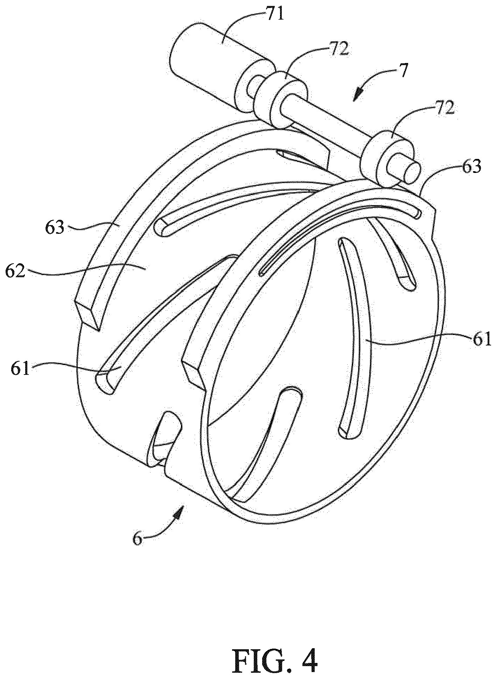

Referring to FIG. 3 and FIG. 4, regarding the continuously variable transmission control system for a rolling vehicle, the annular driving unit 6 comprises an annular body 62 and at least one arcuate gear rack 63. The oblique guide holes 61 are disposed at the annular body 62. The oblique guide holes 61 are spaced apart equidistantly. The arcuate gear rack 63 is disposed on the outer circumferential surface of the annular body 62. The driving gear 72 of the transmission driving unit 7 meshes with the arcuate gear rack 63. Therefore, the annular driving unit 6 are driven by the driving motor 71 and the driving gear 72 to rotate clockwise or counterclockwise relative to the transmission frame 1, so as to cause the ball-driven continuously variable transmission to undergo continuously variable transmission.

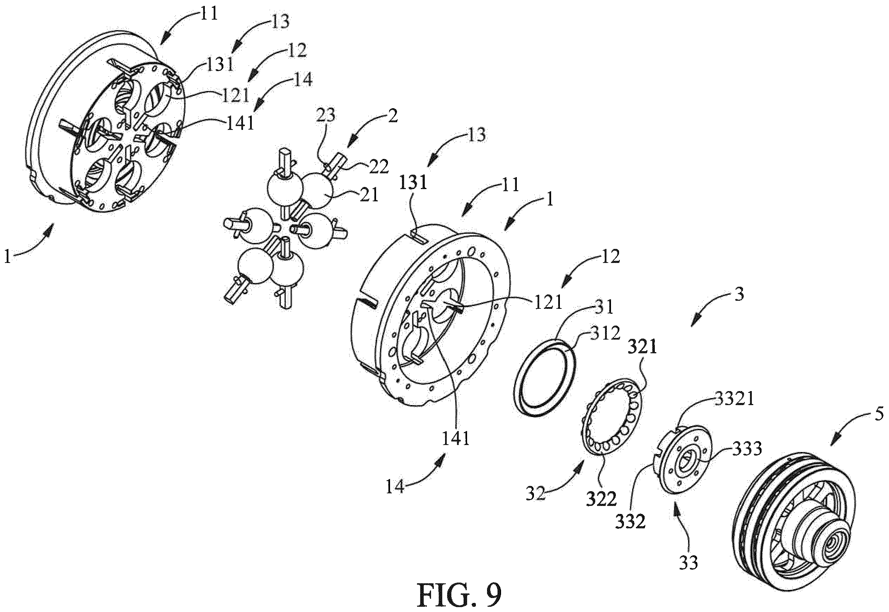

Referring to FIG. 9 through FIG. 12, regarding the continuously variable transmission control system for a rolling vehicle, the oblique support components 33 are each T-shaped. After penetrating the truncated-cone ball rings 32 and the oblique support rings 31, protruding portions 332 of the oblique support components 33 are connected to the cylindrical depression on one side of the transmission frame 1. Therefore, regarding the continuously variable transmission control system for a rolling vehicle according to the present disclosure, it is easy to mount the transmission balls 21 on the transmission frame 1.

Referring to FIG. 9 through FIG. 12, regarding the continuously variable transmission control system for a rolling vehicle, the protruding portions 332 of the oblique support components 33 each comprise a plurality of extending guide grooves 3321 arranged annularly and adapted to be in communication with the guide slots 14, respectively. Therefore, according to the present disclosure, the continuously variable transmission control system for a rolling vehicle increases the extent to which the transmission units 2 turn.

Referring to FIG. 13 and FIG. 14, regarding the continuously variable transmission control system for a rolling vehicle, the power-input rotor 4 comprises a first axle 42, and the power-output rotor 5 comprises a second axle 52. The first axle 42 and the second axle 52 are pivotally connected to the oblique support components 33 by a bearing 333, respectively. Therefore, according to the present disclosure, the continuously variable transmission control system for a rolling vehicle further allows the transmission frame 1, the transmission units 2 and the oblique support units 3 to be steadily connected between the power-input rotor 4 and the power-output rotor 5.

The present disclosure is disclosed above by preferred embodiments. However, persons skilled in the art should understand that the preferred embodiments are illustrative of the present disclosure only, but shall not be interpreted as restrictive of the scope of the present disclosure. Hence, all equivalent variations and replacements made to the aforesaid embodiments shall fall within the scope of the present disclosure. Accordingly, the legal protection for the present disclosure shall be defined by the appended claims.

## Claims

1. A continuously variable transmission control system for a rolling vehicle, comprising:
an electrically controlled device (9) electrically connected to a transmission driving unit (7), with the transmission driving unit (7) connected to one of a belt-driven continuously variable transmission (8) and a ball-driven continuously variable transmission;
wherein the belt-driven continuously variable transmission (8) comprises a driving wheel (81), a driven wheel (82) and a conveyor belt (83), the conveyor belt (83) being movably fitted in a V-shaped groove of the driving wheel (81) and a V-shaped groove of the driven wheel (82), the driving wheel (81) comprising an inner driving semi-wheel (811) and an outer driving semi-wheel (812), the driven wheel (82) comprising an inner driven semi-wheel (821) and an outer driven semi-wheel (822), with the transmission driving unit (7) connected to the inner driving semi-wheel (811);
wherein the ball-driven continuously variable transmission comprises a transmission frame (1), a plurality of transmission units (2), an annular driving unit (6), two oblique support units (3), a power-input rotor (4) and a power-output rotor (5);
wherein the transmission frame (1) has a plurality of receiving holes (12), a plurality of cruciform guide grooves (13) and a plurality of guide slots (14), the receiving holes (12) being arranged annularly, the cruciform guide grooves (13) being arranged annularly, the guide slots (14) being arranged annularly, the cruciform guide grooves (13) being farther than the receiving holes (12) from a center of the transmission frame (1), the receiving holes (12) being farther than the guide slots (14) from the center of the transmission frame (1), each said receiving hole (12) being connected communicatively between a corresponding one of the cruciform guide grooves (13) and a corresponding one of the guide slots (14);
wherein the transmission units (2) each comprise transmission balls (21), transmission rods (22) and transmission slide bars (23), the transmission rods (22) being movably, penetratingly disposed at the transmission balls (21), respectively, the transmission slide bars (23) being connected perpendicularly to terminal portions of the transmission rods (22), respectively, the terminal portions being exposed from the transmission balls (21), respectively, each said transmission ball (21) being received movably in a corresponding one of the receiving holes (12) and exposed from two open sides of the receiving hole (12), wherein the transmission slide bars (23) and the terminal portions of the transmission rods (22) slide along the cruciform guide grooves (13), respectively, wherein opposing terminal portions of the transmission rods (22) are exposed from the transmission balls (21) and slide along the guide slots (14), respectively;
wherein the annular driving unit (6) is movably fitted in the transmission frame (1) and has a plurality of oblique guide holes (61), the oblique guide holes (61) being movably fitted in the transmission rods (22) to guide the transmission rods (22) in moving in an axial direction of the annular driving unit (6), respectively;
wherein the oblique support units (3) each comprise an oblique support ring (31), a truncated-cone ball ring (32) and an oblique support component (33), the oblique support rings (31) each having an outward-sloping support circular surface (311) and an inward-sloping clamping circular surface (312), the oblique support components (33) each having an outward-sloping clamping circular surface (331), the oblique support components (33) being connected to two sides of the transmission frame (1), respectively, each said truncated-cone ball ring (32) being clamped between a corresponding one of the inward-sloping clamping circular surfaces (312) and a corresponding one of the outward-sloping clamping circular surfaces (331), the outward-sloping support circular surfaces (311) supporting the transmission balls (21) from two open sides of the receiving holes (12), respectively;
wherein the power-input rotor (4) has an inward-sloping power-input clamping circular surface (41);
wherein the power-output rotor (5) has an inward-sloping power-output clamping circular surface (51) such that the inward-sloping power-input clamping circular surface (41) and the inward-sloping power-output clamping circular surface (51) clamp the transmission balls (21) from two open sides of the receiving holes (12), respectively, with the transmission driving unit (7) connected to the annular driving unit (6).

2. The continuously variable transmission control system for a rolling vehicle according to claim 1, wherein the electrically controlled device (9) comprises a processor (91), a sensor control unit (92) and a transmission control unit (93), the processor (91) being electrically connected to the sensor control unit (92) and the transmission control unit (93), the sensor control unit (92) being electrically connected to a gear sensor (921), an engine rotation speed sensor (922), a throttle position sensor (923) or a switch position sensor (926), and a vehicular speed sensor (924), and the transmission control unit (93) being electrically connected to the transmission driving unit (7).

3. The continuously variable transmission control system for a rolling vehicle according to claim 2, wherein the electrically controlled device (9) comprises an input unit (94), a display unit (95), an output unit (96), or a power supply unit (97), each of which is electrically connected to the processor (91), or comprises a combination of the input unit (94), the display unit (95), the output unit (96), and the power supply unit (97).

4. The continuously variable transmission control system for a rolling vehicle according to claim 1, wherein the transmission driving unit (7) comprises a driving motor (71) and a driving gear (72) which are connected, the driving motor (71) being electrically connected to the electrically controlled device (9), and the driving gear (72) being connected to the inner driving semi-wheel (811) or the annular driving unit (6).

5. The continuously variable transmission control system for a rolling vehicle according to claim 1, wherein the transmission frame (1) comprises two connected semi-transmission frames (11), the semi-transmission frames (11) each having a plurality of semi-receiving holes (12), a plurality of semi-cruciform guide grooves (131) and a plurality of semi-guide slots (14) to form the receiving holes (12), the cruciform guide grooves (13) and the guide slots (14), respectively.

6. The continuously variable transmission control system for a rolling vehicle according to claim 1, wherein the transmission balls (21) each comprise therein two limiting lubrication washers (211) and a lubrication washer (212), the lubrication washer (212) being disposed between the limiting lubrication washers (211), the transmission rods (22) being movably, penetratingly disposed at the limiting lubrication washers (211) and the lubrication washer (212).

7. The continuously variable transmission control system for a rolling vehicle according to claim 1, wherein the annular driving unit (6) comprises an annular body (62) and at least one arcuate gear rack (63), and the oblique guide holes (61) are disposed at the annular body (62), with the arcuate gear rack (63) disposed on an outer circumferential surface of the annular body (62) and connected to the transmission driving unit (7).

8. The continuously variable transmission control system for a rolling vehicle according to claim 1, wherein the oblique support components (33) are each T-shaped, and protruding portions (332) of the oblique support components (33) penetrate the truncated-cone ball rings (32) and the oblique support rings (31) before being connected to a side of the transmission frame (1).

9. The continuously variable transmission control system for a rolling vehicle according to claim 8, wherein the protruding portions (332) of the oblique support components (33) each comprise a plurality of extending guide grooves (3321) arranged annularly and adapted to be in communication with the guide slots (14), respectively.

10. The continuously variable transmission control system for a rolling vehicle according to claim 1, wherein the power-input rotor (4) comprises a first axle (42), and the power-output rotor (5) comprises a second axle (52), with the first and second axles (42), (52) pivotally connected to the oblique support components (33), respectively.
